# EUROPÄISCHE PATENTSCHRIFT

(11) **EP 2 076 750 B1**
(45) Veröffentlichungstag und Bekanntmachung des Hinweises auf die Patenterteilung: **12.05.2010**
(21) Anmeldenummer: 07818913.1
(22) Anmeldetag: 11.10.2007
(51) Int. Cl.: G01L 9/00, G01L 17/00, B60C 23/04

(54) **FLUIDSENSOR**
FLUID SENSOR
CAPTEUR DE FLUIDE

(30) Priorität: 11.10.2006 DE 102006048068
(43) Veröffentlichungstag der Anmeldung: 08.07.2009
(73) Patentinhaber: Atmel Automotive GmbH, 74072 Heilbronn (DE)
(72) Erfinder: MUTZ, Dieter, 74078 Heilbronn (DE)
(74) Vertreter: Koch Müller Patentanwaltsgesellschaft mbH
(86) Internationale Anmeldenummer: PCT/EP2007/008842
(87) Internationale Veröffentlichungsnummer: WO 2008/043555

(56) Entgegenhaltungen:
- KR-A- 20010 089 954
- US-A- 4 734 674
- US-A- 5 747 694
- US-A1- 2003 005 782
- US-A1- 2005 210 992
- US-A1- 2005 258 953
- US-A1- 2006 016 265
- US-B1- 6 619 110

## Beschreibung

Die vorliegende Erfindung betrifft einen Fluidsensor zur Ermittlung eines Fluidkennwerts mit einem elektronischen Sensorelement, das eine aktive Oberfläche zur Bestimmung des Fluidkennwerts aufweist, mit einer dem Sensorelement zugeordneten Trägerplatte und mit einer dem Sensorelement zugeordneten Filtereinrichtung zum Filtern des Fluids, wobei die aktive Oberfläche des Sensorelements der Trägerplatte zugewandt ist und in der Trägerplatte gegenüberliegend zur aktiven Oberfläche des Sensorelements ein Durchbruch vorgesehen ist,

Ein vom Markt her bekannter Fluidsensor ist als Reifendrucksensor ausgeführt und ist für eine Montage im Ventilbereich eines Kraftfahrzeugreifens vorgesehen. Der bekannte Fluidsensor ist mit einem elektronischen Sensorelement ausgerüstet, das eine als Druckaufnehmermembran ausgeführte, aktive Oberfläche aufweist. Das Sensorelement ist auf eine Trägerplatte aufgebracht, die mit einer separat hergestellten, hohlzylindrischen Halterung für die Filtereinrichtung ausgerüstet ist. Die hohlzylindrische Halterung ist für eine fluiddichte Verbindung zwischen der Filtereinrichtung und dem Sensorelement vorgesehen. Die Filtereinrichtung hat die Aufgabe, Fremdkörper wie Schmutzpartikel, die in dem Fluid, insbesondere in einem Gas oder einer Flüssigkeit, enthalten sein können, von der aktiven Oberfläche des Sensorelements fernzuhalten, um eine Beschädigung des Sensorelements zu verhindern. Zu diesem Zweck ist die Filtereinrichtung aus einem porösen Material, typischerweise aus einem offenporigen Polytetrafluorethylenmaterial, hergestellt. Konzentrisch zu der Ausnehmung in der hohlzylindrischen Halterung ist in der Trägerplatte ein Durchbruch vorgesehen. Somit kann das Sensorelement auf einer der hohlzylindrischen Halterung abgewandten Seite der Trägerplatte angebracht werden und ist durch den Durchbruch kommunizierend mit der Filtereinrichtung verbunden. Zur Gewährleistung der Dichtigkeit ist außerdem vorgesehen, dass die hohlzylindrische Halterung abdichtend an der Trägerplatte aufgenommen ist. Für die Herstellung des Fluidsensors sind mehrere Montageschritte notwendig, die insbesondere das Fügen der hohlzylindrischen Halterung an die Trägerplatte und das Fügen der Filtereinrichtung in die hohlzylindrische Halterung umfassen.

Ein derartiger Sensor ist aus der US 6 619 110 B1 bekannt, wobei der Fluidsensor ein Sensorelement aufweist, das auf einer Trägerplatte befestigt wird, wobei die aktive Oberfläche des Sensorelements der Trägerplatte zugewandt ist und gegenüberliegend zur aktiven Oberfläche des Sensorelements ein Durchbruch vorgesehen ist. Ein Gasfilter wird in dem Durchbruch der Trägerplatte aufgenommen, wobei der Gasfilter mittels eines Klebemittels gasdicht und direkt auf dem Sensorelement befestigt wird. Der Gasfilter und das Sensorelement werden mit einem Harz eingekapselt, sodass sie fest in dem Durchbruch und auf der Trägerplatte gehalten werden.

Aufgabe der vorliegenden Erfindung ist es, einen Fluidsensor bereitzustellen, der einen einfacheren und kostengünstigeren Aufbau aufweist.

Diese Aufgabe wird erfindungsgemäß durch einen Fluidsensor mit den Merkmalen des Patentanspruches 1 gelöst. Günstige Ausgestaltungsformen sind Gegenstand von Unteransprüchen.

Der erfindungsgemäße Fluidsensor zeichnet sich dadurch aus, dass ein Endbereich der Filtereinrichtung abdichtend in dem Durchbruch der Trägerplatte aufgenommen ist. Damit kann eine entscheidende Vereinfachung der Aufbauswelse des Fluidsensors erreicht werden. Die Trägerplatte und die Filtereinrichtung sind derart aufeinander abgestimmt, dass die Filtereinrichtung unmittelbar abdichtend in der Trägerplatte aufgenommen werden kann. Damit kann auf ein Zwischenstück, wie es bei dem bekannten Fluidsensor in Form der hohlzylindrischen Halterung notwendig ist, verzichtet werden. Neben der Einsparung eines Bauteils kann auch auf einen Fügevorgang und eine für die hohlzylindrische Halterung notwendige spezifische und eng zu tolerierende Ausgestaltung der Trägerplatte verzichtet werden. Erfindungsgemäß wird der Durchbruch in der Trägerplatte, der ohnehin zur Gewährleistung einer kommunizierenden Verbindung zwischen Filtereinrichtung und Sensorelement notwendig ist, derart auf die Filtereinrichtung angepasst, dass diese abdichtend in der Trägerplatte aufgenommen werden kann.

In Ausgestaltung der Erfindung ist vorgesehen, dass der Durchbruch einen Querschnitt aufweist, der kleiner als ein endseitiger Querschnitt der Filtereinrichtung ist. Die Filtereinrichtung kann einen beliebigen, z.B. einen kreisrunden oder einen rechteckigen Querschnitt aufweisen; entscheldend ist, dass die Filtereinrichtung aufgrund der Materialauswahl und der Porosität des Materials (vorzugsweise poröses Polytetrafluorethylen) eine vorteilhafte Elastizität aufweist, so dass sie beim Fügen abschnittsweise elastisch deformiert wird und damit abdichtend im Durchbruch aufgenommen ist. Vorzugsweise hat die Filtereinrichtung einen kreisrunden Querschnitt, so dass sie in einen leicht herzustellenden, vorzugsweise ebenfalls kreisrunden Querschnitt des Durchbruchs aufgenommen werden kann. Der Durchbruch stellt eine umlaufende und gleichförmige Deformation der vorzugsweise zylindrischen Filtereinrichtung sicher, so dass die Anforderungen an die Dichtigkeit zwischen Sensorelement und Filtereinrichtung gewährleistet werden können.

In weiterer Ausgestaltung der Erfindung ist vorgesehen, dass die Trägerplatte als Leiterplatte ausgeführt ist, die zum Ein- und/oder Auskoppeln elektrischer Signale zu und/oder von dem Sensorelement vorgesehen ist. Die Trägerplatte nimmt somit mehrere Funktionen wahr. Sie dient als formstabiler Träger für die Filtereinrichtung und das Sensorelement, sie gewährleistet die abdichtende Aufnahme der Filtereinrichtung und sie ermöglicht die Signalübertragung zu und von dem Sensorelement. Bevorzugt werden für eine als Leiterplatte ausgeführte Trägerplatte kupferkaschierte, glasfaserverstärkte Kunstharzplatten verwendet, die auch unter der Bezeichnung FR4 oder FR5 in der Elektronikindustrie bekannt sind.

In weiterer Ausgestaltung der Erfindung ist vorgesehen, dass die Leiterplatte auf einer dem Sensorelement zugewandten Oberfläche einen umlaufend um den Durchbruch angeordneten Lötring aufweist. Der Lötring ermöglicht eine umlaufende Abdichtung eines aufzulötenden Elements und ist beispielsweise als freigestellter, verzinnter Ring konzentrisch zum Durchbruch angeordnet. Der Lötring kann auch eine von der Kreisform abweichende Kontur wie beispielsweise eine Rechteckkontur aufweisen, um eine vorteilhafte Anpassung an den Querschnitt des Durchbruchs und/oder an eine Geometrie der aufzulötenden Komponente zu gewährleisten.

In weiterer Ausgestaltung der Erfindung ist vorgesehen, dass das Sensorelement auf den Lötring aufgelötet ist. Das Sensorelement weist zu diesem Zweck eine zur Geometrie des Lötrings korrespondierende, metallische Stirnfläche auf, die eine unmittelbare stoffschlüssige Verbindung zwischen dem Lötring und dem Sensorelement ermöglicht. Damit kann in vorteilhafter Weise eine dichte Verbindung zwischen dem Sensorelement und der Leiterplatte verwirklicht werden. Alternativ oder ergänzend kann auch eine Klebeverbindung zwischen dem Sensorelement und der Leiterplatte vorgesehen werden.

In weiterer Ausgestaltung der Erfindung ist vorgesehen, dass ein Blendenring auf den Lötring aufgelötet ist, der eine Durchgangsbohrung aufweist, deren Durchmesser kleiner, insbesondere zumindest 2fach kleiner, als ein Durchmesser des Durchbruchs ausgeführt ist. Dem Blendenring, der als Metallring oder als metallisierter Kunststoffring ausgeführt sein kann, kommt die Aufgabe zu, eine zusätzliche Dichtwirkung zwischen der Filtereinrichtung und dem Sensorelement zu bewirken. Diese Dichtwirkung wird erzielt, indem das Filterelement stirnseitig an einer vorzugsweise ringförmigen Oberfläche des Blendenrings anliegt und somit nur im Bereich der im Blendenring vorgesehenen Durchgangsbohrung kommunizierend mit der Sensoreinrichtung verbunden ist, während die übrige Stirnfläche der Filtereinrichtung als Dichtfläche dient.

In weiterer Ausgestaltung der Erfindung ist vorgesehen, dass der Durchbruch als Stufenbohrung in der Trägerplatte ausgebildet ist. Eine Stufenbohrung weist zumindest zwei unterschiedliche Durchmesser auf. Die Stufenbohrung ist vorzugsweise derart in die Trägerplatte eingebracht, dass ein größerer Durchmesser auf der dem Sensorelement zugewandten Seite der Trägerplatte vorgesehen ist, während ein kleinerer Durchmesser auf der dem Sensorelement abgewandten Seite der Trägerplatte verwirklicht ist. Dadurch wird für die Filtereinrichtung ein Hinterschnitt gebildet, in den sich der Endbereich der komprimierten Filtereinrichtung nach Passieren des vorgelagerten, engeren Querschnitts ausdehnen kann. Damit kann auch eine vorteilhafte mechanische Verriegelung sowie eine zusätzliche Dichtwirkung in der Art einer Labyrinthdichtung verwirklicht für die Filtereinrichtung verwirklicht werden. Andere Bohrungsformen wie z.B. eine konusabschnittsförmige Bohrung mit einer hinterschnittenen Stufe können alternativ vorgesehen sein. Von entscheidender Bedeutung ist, dass die Filtereinrichtung von dem Durchbruch in der Trägerplatte derart komprimiert wird, dass eine abdichtende Wirkung zwischen Trägerplatte und Filtereinrichtung und eine kommunizierende Verbindung zwischen dem Sensorelement und einer Umgebung des Fluidsensors gewährleistet werden kann.

In weiterer Ausgestaltung der Erfindung ist vorgesehen, dass der Durchbruch eine galvanisch aufgebrachte, umlaufende Dichtlippe aufweist. Eine galvanisch aufgebrachte, umlaufende Dichtlippe kann bei der Herstellung einer Leiterplatte, bei der ohnehin ein galvanischer Schichtaufbau vorgenommen wird, vorgesehen werden. Beispielsweise kann ein beliebig geformter Durchbruch in der Leiterplatte, insbesondere durch Bohren, Laserschneiden, Wasserstrahlschneiden oder Stanzen, hergestellt werden. An den Rand des Durchbruchs grenzt auf einer Seite der Leiterplatte eine metallische Schicht, die als Elektrode für einen galvanischen Beschichtungsprozess dient. Nach Durchführung der galvanischen Beschichtung ist am Rand des Durchbruchs eine nach innen ragende, umlaufende, metallische Wulst gebildet. Diese Wulst verengt den Querschnitt des Durchbruchs bereichsweise und bildet einen Hinterschnitt zur formschlüssigen Aufnahme der Filtereinrichtung.

In weiterer Ausgestaltung der Erfindung ist vorgesehen, dass das Sensorelement, die Trägerplatte und die Filtereinrichtung zumindest im Wesentlichen vollständig von einem formstabilen Vergussmaterial umgeben sind. Das Vergussmaterial, für das insbesondere ein gießfähiges, aushärtbares Kunstharzmaterial gewählt wird, dient zur formstabilen Ummantelung des Sensorelements, der Trägerplatte, der Filtereinrichtung und gegebenenfalls weiterer Komponenten des Fluidsensors. Dabei ist vorgesehen, dass die Filtereinrichtung an einer der Trägerplatte abgewandten Stirnseite nicht mit dem Vergussmaterial benetzt wird, um eine kommunizierende Verbindung des Sensorelements mit der Umgebung des Fluidsensors gewährleisten zu können.

In weiterer Ausgestaltung der Erfindung ist vorgesehen, dass das Sensorelement als Drucksensor, insbesondere zur Ermittlung eines Gasdrucks, ausgebildet ist. Damit kann mit dem erfindungsgemäßen Fluidsensor beispielsweise ein Reifendrucksensor verwirklicht werden.

In weiterer Ausgestaltung der Erfindung ist vorgesehen, dass dem Sensorelement zumindest eine integrierte Schaltung zur Auswertung von Sensorsignalen zugeordnet ist. Die integrierte Schaltung verstärkt die von dem Sensorelement bereitgestellten Sensorsignale und führt eine Auswertung durch, um einen von der Sensoreinrichtung ermittelten Messwert beispielsweise an ein Datenbussystem in einem Kraftfahrzeug übergeben zu können. Beispielsweise kann eine Anzeige des ermittelten Messwerts in einem Anzeigeinstrument des Kraftfahrzeugs vorgenommen werden.

In weiterer Ausgestaltung der Erfindung ist vorgesehen, dass die integrierte Schaltung für eine drahtlose Einkopplung von Versorgungsenergie und für eine drahtlose Auskopplung zumindest eines Sensorsignals ausgebildet ist. Die beanstandet angeordnete Schnittstelle stellt eine Versorgungsenergie, insbesondere in Form von elektromagnetischen Wellen, bereit und empfängt ein von dem Fluidsensor ausgesendetes Signal, das den oder die ermittelten Messwerte enthält Damit kann eine einfach gestaltete Aufbauweise für einen relativbeweglich zur Schnittstelle gelagerten Fluidsensor verwirklicht werden. Dies ist insbesondere bei einer Verwendung des Fluidsensors als Reifendruckmesser von Interesse; dabei wird der Fluidsensor im drehbeweglich gelagerten Rad des Kraftfahrzeugs angebracht, während die Schnittstelle beispielsweise karosseriefest in einem Radkasten in der Nähe des Fluidsensors angebracht werden kann und eine drahtlose Energie- und Signalübertragung ermöglicht.

Der in der Beschreibung und in den Patentansprüchen benutzte Begriff "ein" ist als unbestimmter Artikel und nicht als Zahlwort anzusehen und umfasst, dass mehrere der jeweils beschriebenen Elemente vorliegen können.

Weitere Vorteile und Merkmale der Erfindung ergeben sich aus den Ansprüchen sowie aus der nachfolgenden Beschreibung bevorzugter Ausführungsbeispiele, die anhand der Zeichnungen dargestellt sind.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: eine Draufsicht auf einen Fluidsensor,
- Fig. 2: eine Schnittzeichnung entlang der Linie A - A des in der Fig. 1 dargestellten Fluidsensor,
- Fig. 3: eine weitere Ausführungsform eines Fluidsensors als Schnittzeichnung entlang der Linie A - A.

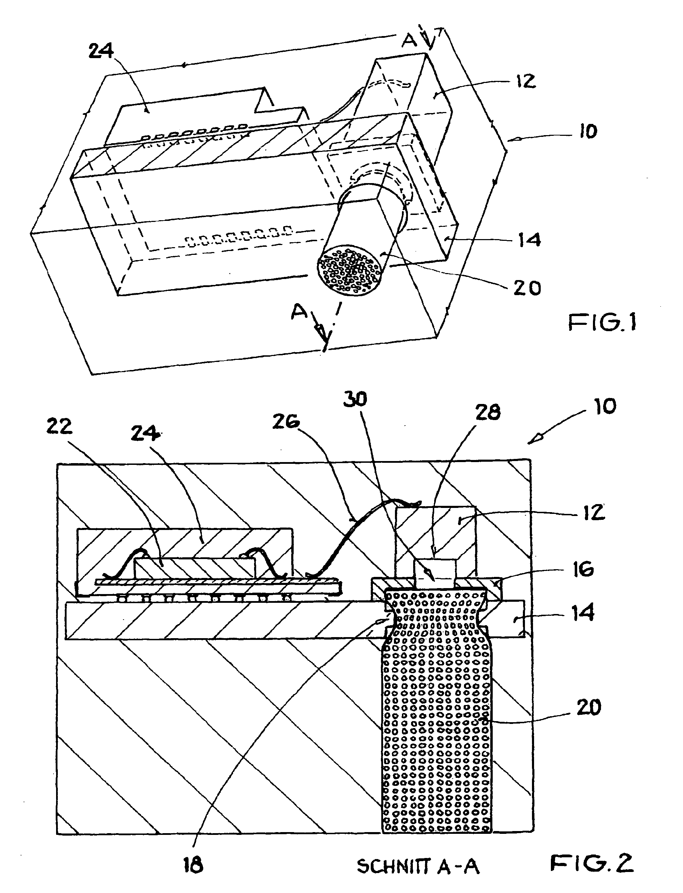

In der Fig. 1 in einer perspektivischen Draufsicht dargestellten Fluidsensor 10 gemäß der vorliegenden Erfindung, zeigt einen als Drucksensor 12 ausgeführtes elektronisches Sensorelement auf. Der Drucksensor 12 ist auf eine als Leiterplatte 14 oder gedruckte Schaltung ausgeführte Trägerplatte angebracht und ist mit einer als Druckaufnehmermembran 28 ausgeführten aktiven Oberfläche der Oberfläche der Leiterplatte 14 zugewandt. Hierbei wird in einen in der Leiterplatte ausgeformten Durchbruch ein Gasfilter 20 der aus einem elastisch verformbaren Material hergestellt ist eingeführt. Indem der in der Leiterplatte ausgeformte Durchbruch einen kleineren Durchmesser als der Gasfilter 20 aufweist, wird eine abdichtende Wirkung zwischen dem Leitplattendurchbruch und dem Gasfilter 20 erzielt. Der Gasfilter 20 wird dabei in einem Fügevorgang, vorzugsweise durch Stecken in die Leiterplatte eingefügt. Hierdurch lässt sich ohne Klebeverbindung eine zuverlässige gasdichte Verbindung herstellen und eine erhebliche Reduzierung der Herstellungskosten in der Massenproduktion erzielen.

Der in der Fig. 2 dargestellte Fluidsensor 10 ist zur Ermittlung eines Gasdrucks vorgesehen und weist zu diesem Zweck ein als Drucksensor 12 ausgeführtes elektronisches Sensorelement auf. Der Drucksensor 12 ist auf eine als Leiterplatte 14 oder gedruckte Schaltung ausgeführte Trägerplatte angebracht und ist mit einer als Druckaufnehmermembran 28 ausgeführten aktiven Oberfläche der Oberfläche der Leiterplatte 14 zugewandt.

Zwischen der Leiterplatte 14 und dem Drucksensor 12 ist ein Blendenring 16 vorgesehen. Der Blendenring 16 ist auf einen nicht näher dargestellten Lötring gasdicht aufgelötet, wobei der Lötring als Struktur einer auf der Leiterplatte 14 vorgesehenen Kupferkaschierung ausgebildet ist. Die Leiterplatte ist mit einem als Stufenbohrung 18 ausgeführten Durchbruch versehen. Der Lötring ist umlaufend an der kreisförmigen Stufenbohrung 18 vorgesehen, so dass der Blendenring 16 zumindest im Wesentlichen konzentrisch zur Stufenbohrung 18 ausgerichtet ist. Der Drucksensor 12 ist stirnseitig gasdicht an den Blendenring 16 angeklebt.

In der Stufenbohrung 18 ist ein aus offenporigem Polytetrafluorethylen hergestellter Gasfilter 20 als Filtereinrichtung aufgenommen. Die schematisch dargestellte Stufenbohrung 18 bildet für den Gasfilter 20 einen Hinterschnitt, da sich der Durchmesser des Durchbruchs abschnittsweise verengt und anschließend wieder erweitert. Der Gasfilter 20 wird im verengten Bereich der Stufenbohrung 18 derart elastisch komprimiert, dass er in einem vorgebbaren Druckbereich eine abdichtende Verbindung gegenüber der Leiterplatte 14 gewährleistet. Dadurch wird verhindert, dass Gas seitlich an dem Gasfilter 20 vorbeiströmen kann und zu einer Verschmutzung des Drucksensors 12 führt. Die Stufenbohrung 18 gewährleistet somit eine kommunizierende Verbindung des Drucksensors 12 mit dem Gasfilter 20 und dadurch auch mit der Umgebung des Fluidsensors 10. Ein typischer Durchmesser für einen Gasfilter 20 liegt in einem Bereich zwischen 1 mm und 5 mm. Eine typische Dicke für die Leiterplatte 14 liegt in einem Bereich zwischen 0,3 mm und 2 mm.

Der Gasfilter 20 ist derart in der Stufenbohrung 18 der Leiterplatte 14 aufgenommen, dass er geringfügig über die dem Drucksensor 12 zugewandte Oberfläche der Leiterplatte 14 hinausragt und mit seiner Stirnseite flächig an dem Blendenring 16 anliegt. Der Blendenring 16 weist zur Aufnahme des zylindrischen Gasfilters 20 eine kreisrunde Ausnehmung auf, so dass der Gasfilter 20 und der Blendenring 16 eine Art Labyrinthdichtung bilden, um somit eine vorteilhafte Abdichtwirkung zu erreichen. Die im Blendenring 16 vorgesehene Durchgangsbohrung 30 weist einen Durchmesser auf, der erheblich kleiner als der Durchmesser des Gasfilters 20 ist, um eine großflächige Anlage des Gasfilters 20 an dem Blendenring 16 zu gewährleisten.

Auf der Leiterplatte 14 ist auch eine als Halbleiterbaustein 22 ausgeführte, integrierte Schaltung vorgesehen, die zur Auswertung von Signalen des Drucksensors 12 ausgebildet ist. Der Halbleiterbaustein 22 ermöglicht auch eine drahtlose Einkopplung von Versorgungsenergie und eine drahtlose Auskopplung des Sensorsignals an eine nicht dargestellte Schnittstelle. Der Halbleiterbaustein 22 ist in einem Gehäuse 24 untergebracht, an dessen Unterseite nicht näher bezeichnete Kontaktflächen für eine Lötverbindung mit der Leiterplatte 14 vorgesehen sind. An einem seitlich abragenden Vorsprung des Gehäuses 24 sind mehrere Bondpads vorgesehen, die eine elektrische Kopplung des Halbleiterbausteins 22 mit dem Drucksensor 12 über Bonddrähte 26 ermöglichen.

Die Leiterplatte 14, der Halbleiterbaustein 22, der Drucksensor 14 und der Gasfilter 20 sind nahezu vollständig von einem formstabilen Kunststoffmaterial umgeben, das den Fluidsensor 10 vor Umwelteinflüssen schützen soll. Lediglich der Gasfilter 20 durchdringt endseitig das Kunststoffmaterial, um eine kommunizierende Verbindung des Drucksensors 12 mit der Umgebung des Fluidsensors 10 gewährleisten zu können. Elektrisch leitende Kontaktflächen sind an der Außenoberfläche des Kunststoffmaterials nicht vorgesehen, da eine Einkopplung von Versorgungsenergie und eine Auskopplung des Sensorsignals bei der dargestellten Ausführungsform ausschließlich drahtlos erfolgt. Bei einer nicht dargestellten Ausführungsform eines Fluidsensors können nach außen tretende, elektrisch leitende Kontaktflächen vorgesehen sein, die beispielsweise für die Einkopplung von Testsignalen oder für einen kabelgebundenen Betrieb des Fluidsensors ausgebildet sind.

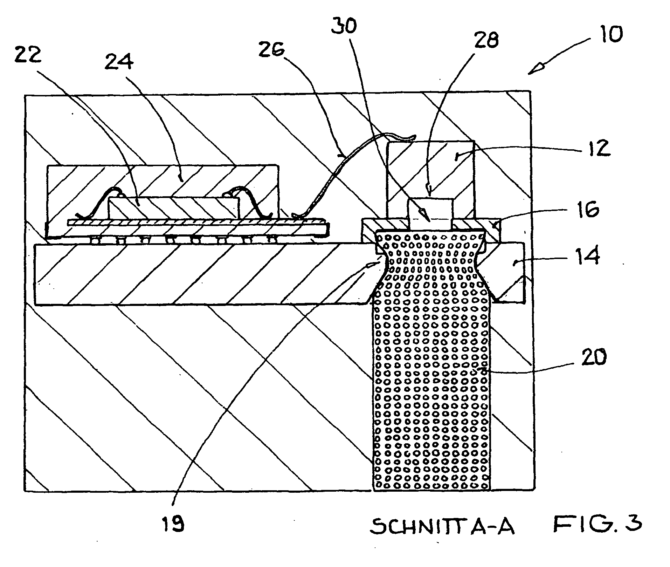

In der Figur 3 ist mittels einer Schnittzeichnung entlang der Linie A - A eine weitere Ausführungsform eines erfindungsgemäßen Drucksensormoduls dargestellt. Hierbei entspricht der dargestellte Aufbau soweit nicht nachfolgend anderweitig beschrieben dem Aufbau der Vorrichtung, die in Zusammenhang mit den in der Figur 2 erläuterten Zeichnungsunterlagen beschrieben ist. In Abwandlung der vorstehend beschrieben Ausführungsform, ist anstelle der Stufenbohrung eine Bohrung 19 vorgesehen, die eine konusabschnittsförmige Fase aufweist. Ein Vorteil dieser Ausführungsform ist es, dass damit entlang der konisch sich verengenden Bohrung 19 eine große Dichtfläche zwischen dem Drucksensor 20 der sich beim Fügen, insbesondere beim Einstecken in die aufnehmende Bohrung 19 elastisch verformt, zur Verfügung gestellt wird. Hierdurch wird eine besonders zuverlässige Dichtwirkung erreicht. Ferner lässt sich der Drucksensor 20 leicht einführen und wird zuverlässig ohne weitere Befestigungsmittel wie Kleben dauerhaft mit dem Drucksensor 12 verbunden.

Bei einer weiteren, nicht dargestellten Ausführungsform der Erfindung weist die Stufenbohrung nur eine Stufe auf, so dass ein größerer Durchmesser der Stufenbohrung an den Blendenring angrenzt, während ein kleinerer Durchmesser der Stufenbohrung vom Drucksensor abgewandt ist. Damit kann eine besonders einfache Herstellung eines hinterschnittenen Durchbruchs für den Gasfilter in der Leiterplatte verwirklicht werden.

### Bezugszeichenliste

### Bezeichnung

- 10: Fluidsensor
- 12: Drucksensor (Sensorelement)
- 14: Leiterplatte
- 16: Blendenring
- 18: Stufenbohrung
- 19: Bohrung
- 20: Gasfilter
- 22: Halbleiterbaustein (integrierte Schaltung)
- 24: Gehäuse
- 26: Bonddrähte
- 28: Druckmembran (aktive Oberfläche)
- 30: Durchgangsbohrung

## Patentansprüche

1. Fluidsensor (10) zur Ermittlung eines Fluidkennwerts
- mit einem elektronischen Sensorelement (12), das eine aktive Oberfläche (28) zur Bestimmung des Fluidkennwerts aufweist,
- mit einer dem Sensorelement (12) zugeordneten Trägerplatte (14), und
- mit einer dem Sensorelement (12) zugeordneten Gasfilter (20) zum Filtern des Fluids, wobei der Gasfilter (20) einen Endbereich aufweist,
- wobei die aktive Oberfläche (28) des Sensorelements (12) der Trägerplatte (14) zugewandt ist und in der Trägerplatte (14) gegenüberliegend zur aktiven Oberfläche (28) des Sensorelements (12) ein Durchbruch vorgesehen ist,
**dadurch gekennzeichnet, dass**
der Durchbruch als eine Stufenbohrung (18) mit einem verengten und wieder erweiterten Durchmesser ausgeführt ist und einen Hinterschnitt ausbildet und der Gasfilter (20) einen elastisch komprimierbaren Endbereich mit einen Querschnitt aufweist, der größer als der Durchmesser des verengten Bereichs der Stufenbohrung (18) ist, sodass der Gasfilter (20) im Bereich der Stufenbohrung (18) derart elastisch komprimiert wird, dass der Gasfilter (20) eine abdichtende Verbindung gegenüber der Trägerplatte (14) ausbildet.

2. Fluidsensor nach Anspruch 1, **dadurch gekennzeichnet, dass** die Trägerplatte (14) als Leiterplatte ausgeführt ist, die zum Ein- und/oder Auskoppeln elektrischer Signale zu und/oder von dem Sensorelement (12) vorgesehen ist.

3. Fluidsensor nach Anspruch 2, **dadurch gekennzeichnet, dass** die Leiterplatte (14) auf einer dem Sensorelement (12) zugewandten Oberfläche einen umlaufend um den Durchbruch angeordneten Lötring aufweist.

4. Fluidsensor nach Anspruch 34, **dadurch gekennzeichnet, dass** das Sensorelement (12) auf den Lötring aufgelötet ist.

5. Fluidsensor nach Anspruch 3, **dadurch gekennzeichnet, dass** ein Blendenring (16) auf den Lötring aufgelötet ist, der eine Durchgangsbohrung (30) aufweist, deren Durchmesser kleiner, insbesondere zumindest zweifach kleiner, als ein Durchmesser des Durchbruchs ausgeführt ist.

6. Fluidsensor nach einem der vorhergehenden Ansprüche, **dadurch gekennzeichnet, dass** der Durchbruch als Stufenbohrung (18) in der Trägerplatte (14) ausgebildet ist.

7. Fluidsensor nach einem der vorhergehenden Ansprüche, **dadurch gekennzeichnet, dass** der Durchbruch eine galvanisch aufgebrachte, umlaufende Dichtlippe aufweist.

8. Fluidsensor nach einem der vorhergehenden Ansprüche, **dadurch gekennzeichnet, dass** das Sensorelement (12), die Trägerplatte (14) und der Gasfilter (20) zumindest im Wesentlichen vollständig von einem formstabilen Vergussmaterial umgeben sind.

9. Fluidsensor nach Anspruch 1, **dadurch gekennzeichnet, dass** das Sensorelement (12) als Drucksensor, zur Ermittlung eines Gasdrucks, ausgebildet ist.

10. Fluidsensor nach Anspruch 1, **dadurch gekennzeichnet, dass** dem Sensorelement (12) zumindest eine integrierte Schaltung (22) zur Auswertung von Sensorsignalen zugeordnet ist.

## Claims

1. Fluid sensor (10) for ascertaining a fluid characteristic value
- with an electronic sensor element (12) having an active surface (28) for determining the fluid characteristic value,
- with a carrier plate (14) associated with the sensor element (12), and
- with a gas filter (20), which is associated with the sensor element (12), for filtering the fluid, wherein the gas filter (20) has an end region,
- wherein the active surface (28) of the sensor element (12) faces the carrier plate (14) and a passage is provided in the carrier plate (14) opposite to the active surface (28) of the sensor element (12),
**characterised in that**
the passage is formed as a stepped bore (18) with a narrowed and again widened diameter and forms an undercut and the gas filter (20) has a resiliently compressible end region with a cross-section greater than the diameter of the narrowed region of the stepped bore (18), so that the gas filter (20) in the region of the stepped bore (18) is resiliently compressed in such a manner that the gas filter (20) forms a sealing connection relative to the carrier plate (14).

2. Fluid sensor according to claim 1, **characterised in that** the carrier plate (14) is constructed as a circuitboard which is provided for coupling electrical signals into and/or out of the sensor element (12).

3. Fluid sensor according to claim 2, **characterised in that** the circuitboard (14) has a solder ring, which is arranged to encircle the passage, on a surface facing the sensor element (12).

4. Fluid sensor according to claim 3, **characterised in that** the sensor element (12) is soldered onto the solder ring.

5. Fluid sensor according to claim 3, **characterised in that** an aperture ring (16) is soldered onto the solder ring and has a passage bore (30) with a diameter which is formed to be smaller than, particularly at least twice as small as, a diameter of the passage.

6. Fluid sensor according to any one of the preceding claims, **characterised in that** the passage is formed as a stepped bore (18) in the carrier plate (14).

7. Fluid sensor according to any one of the preceding claims, **characterised in that** the passage has an encircling sealing lip applied by electroplating.

8. Fluid sensor according to any one of the preceding claims, **characterised in that** the sensor element (12), the carrier plate (14) and the gas filter (20) are surrounded at least substantially completely by a casting material of stable shape.

9. Fluid sensor according to claim 1, **characterised in that** the sensor element (12) is constructed as a pressure sensor for ascertaining a gas pressure.

10. Fluid sensor according to claim 1, **characterised in that** at least one integrated circuit (22) for evaluating sensor signals is associated with the sensor element (12).

## Revendications

1. Capteur fluidique (10) pour la détection d'une valeur caractéristique d'un fluide comportant :
• un élément électronique de capteur (12) qui présente une surface active (28) pour la détermination de la valeur caractéristique du fluide,
• une plaquette support (14) affectée à l'élément de capteur (12) et,
• un filtre à gaz (20) affecté à l'élément de capteur (12) pour filtrer le fluide, le filtre à gaz présentant une zone terminale,
dans lequel la surface active (28) de l'élément de capteur (12) est tournée vers la plaquette support (14), et une ouverture est prévue dans la plaquette support s'étendant à l'opposé de la surface active (28) de l'élément de capteur (12),
**caractérisé en ce que** l'ouverture est réalisée sous la forme d'un perçage étagé à diamètre réduit puis augmenté et d'une partie arrière et **en ce que** le filtre à gaz (20) présente une partie terminale élastique comprimable de section supérieure au diamètre de la zone rétrécie du perçage étagé de façon que, le filtre à gaz (20) étant ainsi élastiquement comprimé, il forme une liaison d'étanchéité avec la plaquette support (14).

2. Capteur fluidique selon la revendication 1, **caractérisé en ce que** la plaquette support (14) est réalisée en tant que plaquette conductrice qui est prévue pour coupler et/ou découpler le signal électrique vers et/ou à partir du capteur fluidique.

3. Capteur fluidique selon la revendication 2, **caractérisé en ce que** la plaquette conductrice (14) présente un anneau de soudage périmétrique autour de l'ouverture sur une surface supérieure tournée vers l'élément de capteur (12).

4. Capteur fluidique selon la revendication 3, **caractérisé en ce que** l'élément de capteur (12) est soudé sur l'anneau de soudage.

5. Capteur fluidique selon la revendication 3, **caractérisé en ce qu'**un anneau diaphragme (16) est soudé sur l'anneau de soudage qui présente un perçage traversant dont le diamètre est inférieur, en particulier est inférieur, à au moins deux fois le diamètre de l'ouverture.

6. Capteur de fluide selon l'une des revendications précédentes, **caractérisé en ce que** l'ouverture dans la plaquette support (14) est un perçage étagé (18).

7. Capteur de fluide selon l'une des revendications précédentes, **caractérisé en ce que** l'ouverture comporte une lèvre d'étanchéité périphérique apportée par galvanisation.

8. Capteur de fluide selon l'une des revendications précédentes, **caractérisé en ce que** l'élément de capteur (12), la plaquette support (14) et le filtre à gaz (20) sont entourés au moins entièrement par un matériau coulé de forme stable.

9. Capteur de fluide selon la revendication 1, **caractérisé en ce que** l'élément de capteur (12) est réalisé en tant que capteur de pression pour la détection d'une pression de gaz.

10. Capteur de fluide selon la revendication 1, **caractérisé en ce qu'**à côté de l'élément de capteur (12) est prévu un circuit intégré pour l'exploitation des signaux de capteur.
